# EUROPEAN PATENT APPLICATION

(11) **EP 0 771 987 A1**
(43) Date of publication of application: **07.05.1997**
(21) Application number: 96301633.2
(22) Date of filing: 11.03.1996
(51) Int. Cl.: F16L 33/02, F16L 55/162, F16L 58/10, B05D 7/22

(54) **Method of lining pipes**

(30) Priority: 01.11.1995 JP 284822/95
(71) Applicant: TOKYO GAS CO., LTD., Minato-ku Tokyo 105 (JP); Hakko Co., Ltd., Meguro-ku Tokyo (JP)
(72) Inventor: Toyoda, Shigeru, Urawa-shi, Saitama-ken 336 (JP); Yagi, Shuichi, 503, Ekureru daisan Myorenji, Yokohama-shi, Kanagawa-ken 230 (JP); Itagi, Masaaki, Yokohama-shi, Kanagawa-ken 234 (JP); Ike, Nobukatsu, c/o Gijutsukaihatsu Cent., Yamato-shi, Kanagawa-ken 242 (JP); Ohshima, Kenji, c/o Gijutsukaihatsu Cent., Yamato-shi, Kanagawa-ken 242 (JP)
(74) Representative: Shindler, Nigel

(57) **Abstract**

A method of lining the internal surface of a pipe, said method comprising the steps of:
introducing a predetermined amount of a resin into the pipe through one end thereof;
causing the introduced resin to move through the pipe toward the opposite end thereof, so as to form a resin lining layer on the internal surface of the pipe;
causing the exhaust air from the pipe to pass through a purifying apparatus before being discharged into the atmosphere.

## Description

The present invention relates to a method of lining the internal surface of an existing underground pipe such as a gas pipe, water pipe, etc for the purpose of internal surface repair or the rehabilitation thereof. In particular, the present invention relates to a pipeline resin lining method including exhaust air purification, so that harmful gaseous components contained in an exhaust air may be absorbed to avoid a problem of environment pollution.

There have been suggested various methods of lining the internal surface of an existing pipe with a resin in order to carry out pipeline internal surface repair or the rehabilitation thereof.

For instance, Japanese Patent Gazette 61-24067 discloses a method wherein a predetermined amount of a liquid resin is introduced into an existing pipe and is forced to move through the pipe by means of a high speed air flow, so that a desired resin lining layer may be formed on the internal surface of the existing pipe.

Further, Japanese Patent Gazette 63-65983 discloses another method, where at first a predetermined amount of a liquid resin is introduced in a plug form into an existing pipe, then the introduced resin plug is forced through the pipe by air pressure, so that a desired resin lining layer is formed on the internal surface of the existing pipe.

In both of the above prior art methods, the lining resin is composed of a main agent and a hardening agent, and is in a liquid condition at room temperature. Usually, an epoxy resin, vinylester resin, acryl resin or urethane resin is used as a main agent. A polymercaptan, polyol, amine or a peroxide is used as a hardening agent.

However, the above substances used as a main agent and as a hardening agent are usually those which generates some harmful gases and hence unpleasant odours. When such a main agent and hardening agent are mixed together, introduced into and moved through an existing pipe for a lining operation, there is always a problem that an exhaust air expelled from the pipe contains such harmful gaseous components, hence constituting an environmental pollution.

An object of the present invention is to solve the above-mentioned problem peculiar to the above-mentioned prior art, and to provide an improved pipeline resin lining method which is capable of preventing harmful gaseous components from polluting the ambient atmosphere.

According to the present invention, there is provided a pipeline resin lining method of lining the internal surface of a pipe. Said method comprises the steps of introducing a predetermined amount of a resin into the pipe through an open end thereof, causing the introduced resin to move through the pipe toward an opposite open end thereof, so as to form a resin lining layer on the internal surface of the pipe, rendering the exhaust air from the pipe to pass through a purifying and deodorising apparatus before being discharged into ambient atmosphere.

In one aspect of the present invention, the purifying apparatus is connected to the pipe through an extra resin receiving tank. Such purifying apparatus comprises a plurality of purifying units arranged in the vertical direction and received in a vertically disposed casing. In detail, these purifying units contain various different agents, including activated carbon of coconut shell and granular zeolite.

In another aspect of the present invention, the purifying agent in each unit has a piling height of 100 - 600mm, preferably 150mm.

In a further aspect of the present invention, a speed of the exhaust air passing through the purifying apparatus is set at 0.2 - 1.0 m/sec, preferably at 0.5 m/sec.

Some embodiments of the present invention will now be described by way of example with reference to the accompanying drawings, in which:
Figure 1 is an explanatory view illustrating a first embodiment of a method according to the present invention;
Figure 2 is an explanatory view illustrating in detail the first embodiment of the method according to the present invention;
Figure 3 is an explanatory view illustrating a second embodiment of the method according to the present invention;
Figure 4 is a perspective view illustrating a purifying apparatus for use in the first and second embodiments of the method according to the present invention; and
Figure 5 is a perspective view illustrating one purifying unit incorporated in the apparatus of Figure 4.

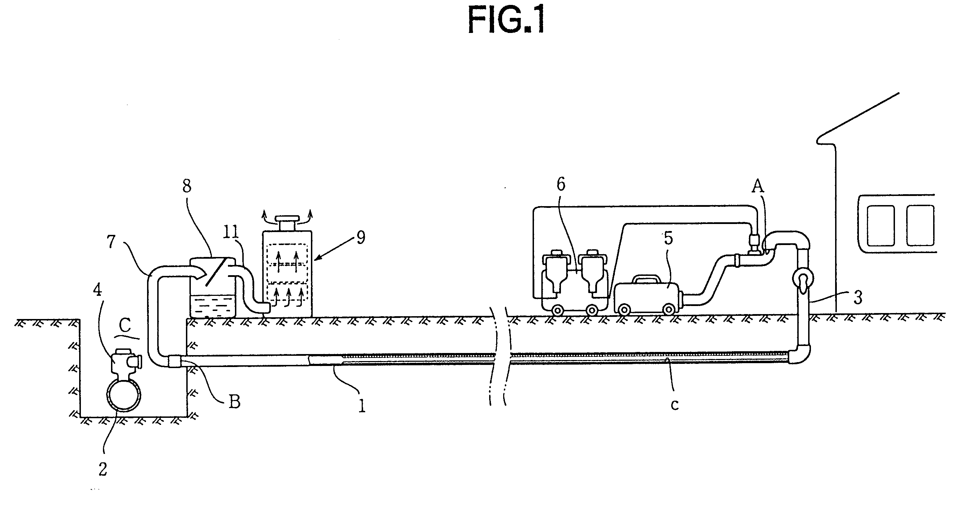

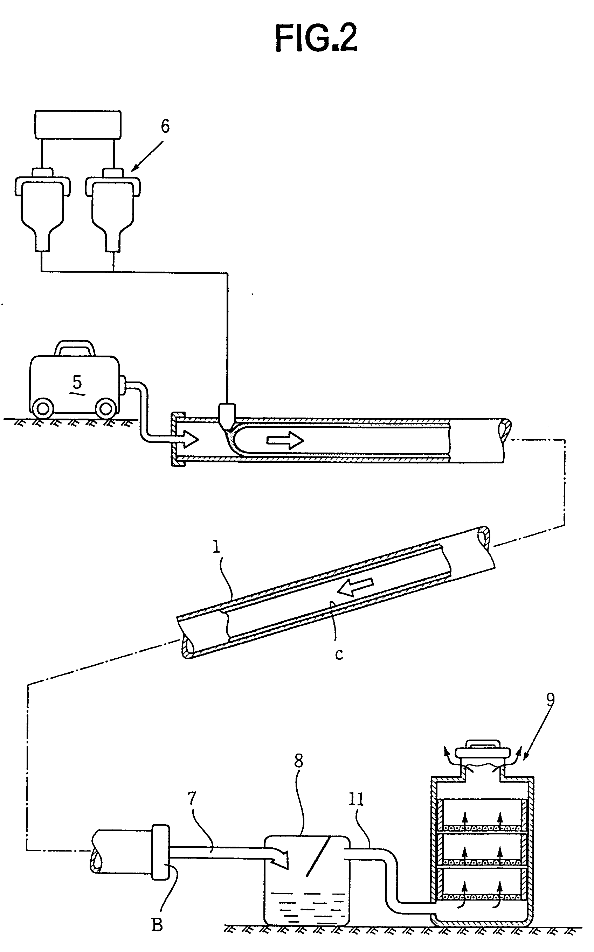

A first embodiment of the method according to the present invention will be described in detail below, with reference to Figures 1 and 2.

Referring to Figure 1, reference numeral 1 represents an existing underground pipe to be treated in the resin lining operation, which is branching from a main pipe 2 (buried on road side) and extending to a user's house.

In fact, the pipe 1 is used as a service pipe including a meter riser 3 which extends out of ground surface. The meter riser 3 is provided at one end thereof with a meter (not shown) which shall be removed therefrom so as to form a first open end A for the resin lining operation. On the other hand, a pit C is formed by digging at a position where the service pipe 1 is branching from the main pipe 2, so that the branching position is exposed and the service pipe 1 is separated from the main pipe 2 by being separated from a service tee 4. In this way, a second open end B is formed on the service pipe 1 for the resin lining operation.

Before the line operation, an air blower 5 is connected to the first open end A of the service pipe 1. A resin mixing/supplying apparatus 6 containing a main agent resin and a hardening agent is positioned near by, with the outlet thereof connected to the air blowing passage way of the air blower 5. On the other hand, an extra resin receiving tank 8 is connected through a hose 7 to the second open end B of the service pipe 1. Further, an exhaust gas purifying apparatus 9 is connected via a hose 11 to the extra resin receiving tank 8 in a manner such that the purifying apparatus 9 is communicated with the upper inner space of the tank 8.

By operating the air blower 5, a high speed air flow is generated to cause a mixed liquid resin (supplied from the resin mixing/supplying apparatus 6) to flow into the meter riser 3. Then, by means of the same air flow, the resin is forced to flow into and through the service pipe 1 toward the second open end B, so that a resin lining layer c is formed on the internal surface of the pipe 1. Meanwhile, the exhaust air being expelled from the pipe 1 flows out of the pipe through the second open end B. Said exhaust air then flows through the hose 7, the extra resin receiving tank 8, the hose 11 and the purifying apparatus 9 before being discharged into the ambient atmosphere. With the flow of the exhaust air in this manner, a small amount of an extra resin is caused to flow out of the pipe 1 so as to be received into the receiving tank 8 via the hose 7. The detailed process of the first embodiment is illustrated in Figure 2.

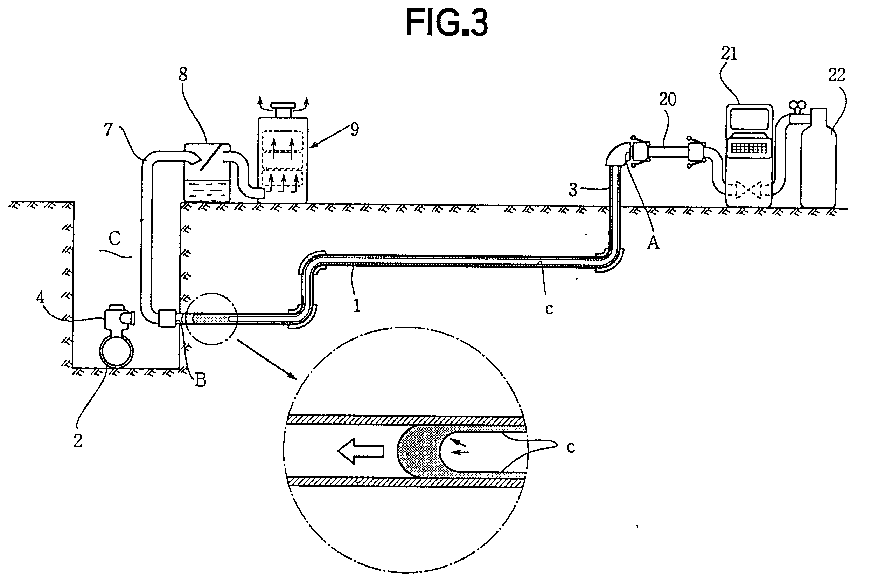

A second embodiment of the method according to the present invention will be described in detail below, with reference to Figure 3.

Referring to Figure 3, as in the first embodiment, reference numeral 1 represents an existing underground pipe to be treated in the resin lining operation, which is branching from a main pipe 2 (buried on road side) and extending to a user's house.

Similarly, the pipe 1 is used as a service pipe including a meter riser 3 which extends out of ground surface. The meter riser 3 is provided at one end thereof with a meter (not shown) which shall be removed therefrom so as to form a first open end A for the resin lining operation. On the other hand, a pit C is formed by digging at a position where the service pipe 1 is branching from the main pipe 2, so that the branching position is exposed and the service pipe 1 is separated from the main pipe 2 by being separated from a service tee 4. In this way, a second open end B is formed on the service pipe 1 for the resin lining operation.

Before the lining operation, a resin cassette 20 containing a predetermined amount of resin is directly connected to the first open end A of the service pipe 1. A compressed air cylinder 22 is connected through a control device 21 to the resin cassette 20. On the other end, as in the first embodiment, an extra resin receiving tank 8 is connected through a hose 7 to the second open end B of the service pipe 1. Further, a purifying apparatus 9 is connected via a hose 11 to the extra resin receiving tank 8 in a manner such that the purifying apparatus 9 is communicated with the upper inner space of the tank 8.

The resin cassette 20 contains a predetermined amount of mixed resin including a main agent (such as epoxy resin) and a hardening agent (such as a modified aromatic polyamine), which is in a liquid state under a room temperature.

By means of a pressurised air from the air cylinder 22, the mixed resin in the resin cassette 20 is forced to move in a plug form into the meter riser 3, then move into and through the service pipe 1 toward the other end B. With the movement of the resin through the pipe 1, a desired resin lining layer c is formed on the pipe internal wall along the pipe entire length.

In actual operation, the resin injection from the resin cassette 20 may be performed several times in accordance with the length of the pipe 1. Further, with the use of the control device 21, it is possible to control the pressure and flow speed of the air from the cylinder 22. In this way, the resin plug is moved at a stabilised speed, so as to form an even resin lining layer c having a uniform thickness on the internal surface of the service pipe 1.

Just as in the first embodiment, when the resin plug is moving along the pipe 1, the exhaust air being expelled from the pipe 1 flows out of the pipe through the second open end B. Said exhaust air continuously flows through the hose 7, the extra resin receiving tank 8, the hose 11 and the purifying apparatus 9 before being discharged into the ambient atmosphere. With the flowing of the exhaust air in this manner, a small amount of an extra resin is caused to flow out of the pipe 1 so as to be received into the receiving tank 8 via the hose 7.

Hereinafter, the purifying apparatus 9 used in both the first and second embodiments of the present invention will be described in more detail.

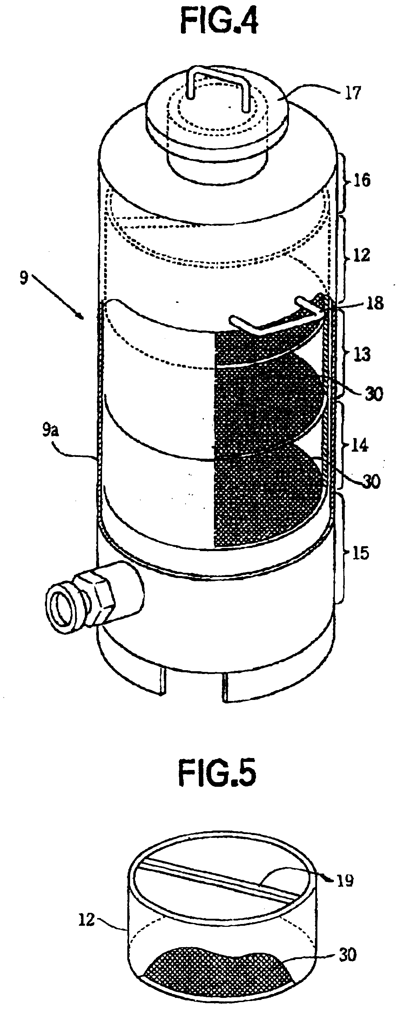

Referring to Figure 4, the purifying apparatus 9 comprises, as one example, three purifying units 12, 13 and 14 arranged one on top of another in the vertical direction and received in a vertically disposed casing 9a having a pair of handles 18. An air inlet chamber 15 is provided at the lowermost portion of the casing body 9a, while an air outlet chamber 16 is provided at the uppermost portion thereof. An outlet structure having an opening/closing lid 17 is provided on the top of the outlet chamber 16.

Referring to Figure 5, each of the purifying units 12 - 14 comprises a short cylindrical container having a wire-gauge bottom 30 and a rod-like lifting member 19.

The units 12 - 14 contain different purifying agents, each of which is adapted to absorb one or two particular harmful gaseous components. For instance, the uppermost unit 12 contains a first type of activated carbon of coconut shell particularly useful for absorbing harmful gaseous components generated from a main agent (epoxy resin) of a lining resin, the middle unit 13 contains another kind of activated carbon of coconut shell for absorbing a harmful gaseous component generating from a hardening agent (polymercaptan), and the lowermost unit 14 contains granular zeolite particularly useful for absorbing harmful gaseous component generating from a hardening agent (amine).

In order to ensure that the exhaust air will be in contact with the purifying agents for sufficient time, it is preferred that the purifying agent in each unit comprises a layer which is between 100 - 600 mm deep, preferably 150 mm, and that the speed of the exhaust air passing through the apparatus 9 is set at 0.2 - 1.0 m/sec, preferably at 0.5 m/sec.

It is thus possible to ensure that the exhaust air from the service pipe 1 passes through the purifying units 12 - 14 in such a way that the harmful gaseous components generating from the lining resin and contained in the exhaust air can make full contact with the purifying agents so as to be properly absorbed, ensuring an effect that the exhaust gas passing from the purifying apparatus 9 contains no harmful gaseous components.

Further, with the use of the purifying apparatus 9, since the units 12 - 14 contain different agents which are respectively useful for absorbing several kinds of harmful gaseous components generating from a lining resin, only one purifying apparatus is needed for deodorising treatment in a pipeline resin lining operation, thereby increasing purifying efficiency and reducing equipment cost.

Moreover, with the use of the purifying apparatus 9, if the layer of purifying agent in each deodorising unit has a depth height of 100 - 600 mm, preferably 150 mm, and the speed of the exhaust air passing through the deodorisation apparatus 9 is set at 0.2 - 1.0 m/sec, preferably at 0.5 m/sec, the exhaust air containing harmful gaseous components will have sufficient time to contact with the purifying agents, thereby ensuring a reliable effect.

While the presently preferred embodiments of this invention have been shown and described above, it is to be understood that these disclosures are for the purpose of illustration and that various changes and modifications may be made without departing from the scope of the invention as set forth in the appended claims.

## Claims

1. A method of lining the internal surface of a pipe, said method comprising the steps of:
introducing a predetermined amount of a resin into the pipe through one end thereof;
causing the introduced resin to move through the pipe toward the opposite end thereof, so as to form a resin lining layer on the internal surface of the pipe;
causing the exhaust air from the pipe to pass through a purifying apparatus before being discharged into the atmosphere.

2. A method according to claim 1, wherein the purifying apparatus is connected to the pipe through an excess resin receiving tank.

3. A method according to claim 1 or claim 2 wherein the purifying apparatus comprises a plurality of purifying units arranged in the vertical direction and received in a vertically disposed casing.

4. A method according to claim 3, wherein each of the plurality of purifying units contains a different purifying agent.

5. A method according to claim 4, wherein the purifying agents include an activated carbon of coconut shell and a granular zeolite.

6. A method according to claim 3 or claim 4, wherein the purifying agent in each unit comprises a layer which is 100 - 600 mm deep.

7. A method according to claim 6, wherein the layer is 150 mm deep.

8. A method according to any preceding claim, in which the speed of the exhaust air passing through the purifying apparatus is set at 0.2 - 1.0 m/sec.

9. A method according to any preceding claim, wherein the speed of the exhaust air passing through the apparatus is set at 0.5 m/sec.
